# EUROPEAN PATENT SPECIFICATION

(11) **EP 2 452 476 B1**
(45) Date of publication and mention of the grant of the patent: **18.09.2013**
(21) Application number: 09780451.2
(22) Date of filing: 10.07.2009
(51) Int. Cl.: H04L 29/06

(54) **METHOD FOR SELECTING AN IPSEC POLICY**
VERFAHREN ZUM AUSWÄHLEN EINER IPSEC POLICY
PROCEDE DE SELECTION D'UN POLICY IPSEC

(43) Date of publication of application: 16.05.2012
(60) Divisional application: 13167108.3
(73) Proprietor: Telefonaktiebolaget LM Ericsson (publ), 164 83 Stockholm (SE)
(72) Inventor: KRUPP, Daniel, H-1112 Budapest (HU); SZABÓ, Gergely, H-1165 Budapest (HU)
(74) Representative: Mitchell, Matthew Benedict David
(86) International application number: PCT/EP2009/058850
(87) International publication number: WO 2011/003470

(56) References cited:
- WO-A1-2005/010777
- CHALOUF M A ET AL: "Introduction of Security in the Service Level Negotiated with SLNP Protocol" NEW TECHNOLOGIES, MOBILITY AND SECURITY, 2008. NTMS '08, IEEE, PISCATAWAY, NJ, USA, 5 November 2008 (2008-11-05), pages 1-5, XP031366572
- KANDA M ET AL: "Usagi ipv6 ipsec development for linux" APPLICATIONS AND THE INTERNET WORKSHOPS, 2004. SAINT 2004 WORKSHOPS. 2 004 INTERNATIONAL SYMPOSIUM ON 26-30 JAN. 2004, PISCATAWAY, NJ, USA,IEEE LNKD- DOI:10.1109/SAINTW.2004.1268582, 26 January 2004 (2004-01-26), pages 145-149, XP010683909 ISBN: 978-0-7695-2050-6 cited in the application
- KENT K SEO BBN TECHNOLOGIES S: "Security Architecture for the Internet Protocol; rfc4301.txt" IETF STANDARD, INTERNET ENGINEERING TASK FORCE, IETF, CH, 1 December 2005 (2005-12-01), XP015043220 ISSN: 0000-0003
- nn: "An Introduction to IP Security (IPSec) Encryption"[Online] 19 May 2008 (2008-05-19), XP002591798 Retrieved from the Internet: URL:http://www.cisco.com/application/pdf/p aws/16439/IPSECpart8.pdf> [retrieved on 2010-07-14]

## Description

### Technical Field

The invention relates to a Security Policy Database in a communication network, and in particular to querying and populating a Security Policy Database.

### Background

The security architecture for the Internet Protocol (IPsec) is described in RFC4301: "Security Architecture for the Internet Protocol". RFC4301 describes a framework for IP traffic protection that is based on requirements defined by a Security Policy Database (SPD). A SPD is stored and maintained at a node, and is established and maintained by a user or system administrator, or by an application operating within constraints established by either a user or system administrator of the above.

A Security Policy (SP) contained in the SPD is a rule that tells a node receiving an IP packet how to process that packet. An SP may define what sort of packets should be processed using IPsec, how the IPsec should be applied and so on.

When a node sends or receives an IP packet, the SPD must be consulted if the traffic is sent on an IPsec enabled interface, regardless of whether the IPsec or non-IPsec. Telecom equipments implementing the IPsec framework need to store occasionally a high amount of policies, thus the size of the SPD can be large. The policy matching operation for each IP packet must be performed as quickly as possible in order to maintain the network capacity of the node.

RFC 4301 does not define the structure of an SPD or how it should interface with other functions. However, RFC 4301 does specify that the SPD must store SPs as an ordered list of entries. An example of an existing SBD structure implemented in FreeBSD 7.0 or Linux 2.6.x kernels is described in USAGI IPv6 IPsec Development for Linux. Mitsuru Kanda, Kazunori Miyazawa, Hiroshi Esaki http://hiroshi1.hongo.wide.ad.jp/hiroshi/papers/SAINT2004_kanda-ipsec.pdf. This document describes a policy ordering and storage scheme in which the policy lookup algorithmic cost increases linearly with the number of stored SPs in the event that no relevant SP can be found. When a new SP is provisioned in the SPD, it is provisioned in sequence; in other words, the order of policies in the SPD is determined by the sequence in which they were entered. The SP lookup time therefore depends on when the SP was provisioned in the SPD. In order to improve SP lookup time, caching may be employed to ensure that a policy that applies to one packet may be cached and subsequently retrieved from the cache and applied to subsequent packets that require the same policy.

The publication WO2005/010777-A1 should also be mentioned as relevant prior art, since it discloses a method of querying an IPsec Security Policy database. However mentioned publication is silent about determining a highest Security Policy priority value and does not expressly distinguish between events when, or not, a Security Policy action should be applied to an IP packet.

### Summary

The inventors have recognised that the speed of lookup of a Security Policy (SP) stored in a Security Policy Database (SPD) can be slow, and have devised methods of querying and populating a SPD that provides a faster SP lookup than known methods.

According to a first aspect of the invention, there is provided a method of querying an IPsec SPD comprising a plurality of groups of SPs that have been assigned a priority value. The following steps are carried out:
a) a network node receives an IP packet;
b) a highest SP priority value is determined;
c) the IPSec Security Protocol database is queried for a set of SPs having the determined SP priority value;
d) a determination is made as to whether a SP action from the set of SPs should be applied to the IP packet;
e) in the event that a SP action should be applied to the IP packet, the SP is returned and applied to the IP packet. However, if no SP action from the set of SPs should be applied to the IP packet, then a lower SP priority value is determined and steps steps c) to e) are repeated. Furthermore, if there is no set of SPs having a lower priority group, a determination is made that no SP can be found for applying to the IP packet.

As an option, information from the IP packet header is used to determine whether a SP should be applied to the IP packet. As a further option, the method further comprises calculating a hash value using information from the IP packet header, comparing the calculated hash value for the IP packet with hash values associated with a linked list of SPs. In the event that the hash values match, a determination is made whether a SP action contained in the linked list of SPs should be applied to the IP packet, and in the event that the hash values do not match, a determination is made that no SP action from the linked list of SPs should be applied to the IP packet. As a further option, the method uses information selected from any of a source prefix, a source port, a destination prefix, a destination port and an Upper Layer Protocol.

There is also provided a method of populating an IPsec SP database. A network node receives a SP to be inserted into the SP database and calculates a priority value to assign to the policy. A policy group stored in the database having the same priority value as the calculated value is located, and the SP is stored in that policy group in the SPD.

In an optional embodiment, in the event that a group having the same priority value is not available in the SP database, then a new group is created in the SPD having that has the priority value.

As an option, the method further comprises calculating a hash value for the SP using information contained in SP Selector fields and associating the hash value with the SP in the SPD. As a further option, the information is selected from any of a source prefix, a source port, a destination prefix, a destination port and an Upper Layer Protocol.

According to a second aspect of the invention, there is provided a node for use in a communication network. The node is provided with an IPsec SPD storing a plurality of SPs arranged in policy groups each policy group having been assigned a priority value. Aquerying function is also provided for querying the SPD to find a match for an IP packet by searching groups of SPs in descending order of priority value until a match is found or it is determined that no SP should be applied to the IP packet.

As an option, the node further comprises a receiver for receiving an IP packet, an IPsec function for applying an action for the matching SP to the IP packet, and a transmitter for sending the IP packet to a further network node.

As a further option, the querying function is arranged to calculate a hash value using information contained in the IP packet header, and the querying function is further arranged to compare the calculated hash value with a hash value associated with an SP group to determine whether a SP should be applied to the IP packet.

There is also provided a node for populating an IPSec SPD storing a plurality of SPs arranged in policy groups. The node is provided with a receiver for receiving a SP to be inserted into the SPD and a processor arranged to calculate a priority value to assign to the SP and store the SP with a policy group having the priority value in the SPD.

The processor is optionally arranged to create a new group in the SPD in the event that a group having the same priority value is not already available in the SP database.

The processor is further optionally arranged to calculate a hash value for the SP using information contained a SP Selector field, and associate the hash value with the SP in the SPD.

According to a third aspect of the invention, there is provided a computer program, comprising computer readable code which, when run on a programmable network node, causes the programmable network to perform a method as described above in the first aspect of the invention.

According to a fourth aspect of the invention, there is provided a recording medium storing computer readable code described above in the third aspect of the invention.

According to a fifth aspect of the invention, there is provided a carrier medium carrying the computer readable code described above in the third aspect of the invention.

According to a sixth aspect of the invention, there is provided a network node having installed thereon the program described above in the third aspect of the invention.

### Brief Description of the Drawings

Some preferred embodiments of the invention will now be described by way of example only and with reference to the accompanying drawings, in which:
Figure 1 illustrates schematically in a block diagram a Security Policy Database and structure according to an embodiment of the invention;
Figure 2 is a flowchart showing an insert operation when provisioning a new Security Policy in a Security Policy Database according to an embodiment of the invention;
Figure 3 illustrates schematically in a block diagram an example priority function bit mapping according to an embodiment of the invention;
Figure 4 is a flowchart showing a lookup operation in a Security Policy Database according to an embodiment of the invention;
Figure 5 is a flowchart showing a match lookup operation in a Security Policy Database according to an embodiment of the invention;
Figure 6 illustrates schematically in a block diagram a node for performing a policy lookup operation; and
Figure 7 illustrates schematically in a block diagram a node for populating a Security Policy database.

### Detailed Description

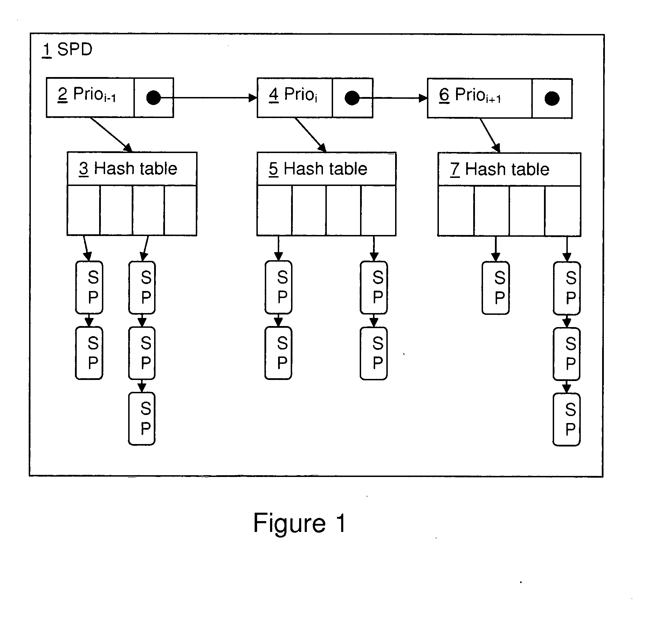

Referring to Figure 1, a Security Policy Database (SPD) 1 is illustrated. A plurality of Security Policies (denoted SP in Figure 1) are provisioned in the database 1. Unlike prior art SPDs, the SPs are grouped together in groups (2, 4, 6) of SPs having the same priority value. A priority value is a value assigned to each SP when it is provisioned in the database.

As can be seen from Figure 1, several SPs may all be accorded the same priority value, and so would all be grouped together in a single policy group (2, 4, 6). The policy groups in the ordered list required by RFC 4301 are ordered by the priority value of the contained policies.

When an IP packet is received at a network node (for example, at a Call Session Control Function in an IMS network), the node must check to see what, if any, SPs apply to the IP packet. It does this by querying the SPD. The SP groups are checked in turn for SPs that match the IP packet. The group with the highest priority is checked first, and if no matching SP is found then the group with the next highest priority is checked, and so on, until a SP is returned an applied to the IP packet, or a message is returned informing the node that no SP matches the packet. In the case that no SP matches the packet, IPsec will not be applied to the packet.

Each SP stored in the SPD comprises a selector and one of more actions, and can be denoted: SP: (SELECTOR, ACTION [, ACTION....])

A selector is sued to determine whether the SP should be applied to an IP packet. If an IP packet matches the selector of an SP then the actions defined by that given SP need to be executed. The selector is defined as follows:

### SELECTOR: (SOURCE_ADDRESS, SOURCE_PREFIX, DESTINATION_ADDRESS, DESTINATION_PREFIX, SOURCE_PORT, DESTINATION_PORT, UPPER_LAYER_PROTOCOL)

A source address and a destination address are each a 32 bit (in the case of IPv4) or 128 bit (in the case of IPv6) number, and can be denoted:
SOURCE_ADDRESS: <32 bit integer> |<128 bit integer>
DESTINATION_ADDRESS: <32 bit integer>| <128 bit integer>

The source and destination prefix numbers represent the number of the valuable bits in a selector source or destination address respectively. Valuable bits are always counter from the most significant bits to the least significant bits in the source or destination addresses. The source and destination prefixes are denoted as follows:
SOURCE_PREFIX: <0-32> | <0-128>
DESTINATION_PREFIX: <0-32> | <0-128>

The upper layer protocol is a number that is stored in the Protocol field of an IPv4 datagram or in the Next Header field of an IPv6 datagram. In case of a selector description the upper layer protocol can be set to the ANY value, as follows:
UPPER_LAYER_PROTOCOL: <8 bit integer> ANY

The source and destination ports are port numbers used by the upper layer protocol. In case of a selector description the source and destination ports can be set to the ANY value as follows:
SOURCE_PORT: <16 bit integer> | ANY
DESTINATION_PORT: <16 bit integer> | ANY

The actions assigned to a given SP are executed in the event that an IP packet matches the selector of the SP. Actions can vary from dropping the matching packet to requiring IPsec processing. Actions described herein are provided by way of example only.

When a new SP is provisioned in the SPD, an insert operation is performed. The insert operation is not frequent; and so in need not be optimized in terms of execution time. The insert operation is described as:
insert(SPD, SP)

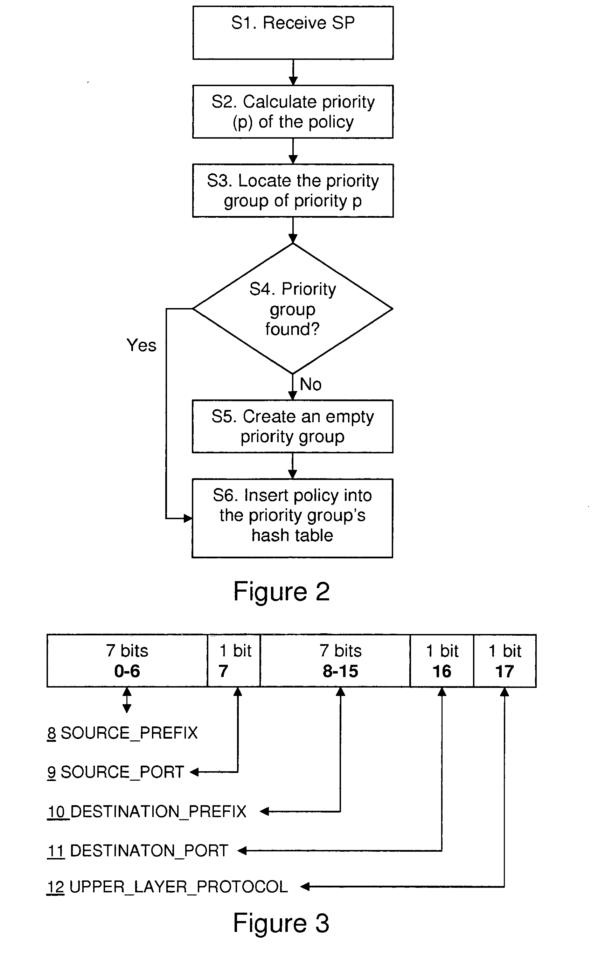

Figure 2 illustrates the steps of inserting a SP, with the following numbering corresponding to the numbering of Figure 2

S1. A new SP is received, for example at a CFCS in an IMS network.

S2. A priority function calculates a priority value of the SP to be inserted:
p = priority(SP.SELECTOR).

A priority value may, for example, be an integer number to a given SELECTOR: priority(SELECTOR) -> integer

The priority value of an SP is not necessarily unique within an SPD, as many SPs can be accorded the same priority value.

When a policy is inserted into the SPD 1, a priority value is calculated based on the SELECTOR fields and it is inserted into a Policy Group corresponding to the given priority value. The Policy Groups are labelled by the SELECTOR fields of the policy, which were used to calculate the priority for the Policy Group. Therefore each policy group is labelled by: SOURCE_PREFIX, DESTINATION_PREFIX values SOURCE_PORT wildcard, DESTINATION_PORT wildcard and UPPER_LAYER_PROTOCOL wildcard fields.

An exemplary implementation of the priority function is for the priority function to map the SOURCE_PREFIX, DESTINATION_PREFIX, SOURCE_PORT, DESTINATION_PORT and UPPER_LAYER_PROTOCOL values to a bitmap. One possible mapping is shown in Figure 3, in which the SOURCE_PREFIX 8 and DESTINATION_PREFIX 10 values are stored in the 0-6 and 8-15 bits. The 7th bit is set to 0 unless the SOURCE_PORT 9 is ANY. The 16th bit is set to 0 unless DESTINATION_PORT 11 is ANY. The 17th bit is also set to 0 unless UPPER_LAYER_PROTOCOL 12 is ANY. Of course, other bitmaps may be set by network operators depending on the requirements of the SP.

S3. A lookup is performed for the policy group with the same priority value in the policy group chain. To speed up the lookup process a helper hash table can be used, as described below.

S4. If a policy group with the same priority value is found, then the operation continues at step S6, if not then the operation continues at step S5.

S5. As policy group was found having priority value p, a new policy group is created created.

S6. A hash value is calculated using a policy group hash function. The input for the hash function is composed from the selected bits of the SP's SELECTOR field. The selected bits are:
a. the bits specified in the source and destination address fields that are not masked out
b. the SOURCE_PORT unless it is set to ANY
c. the DESTINATION_PORT unless it is set to ANY
d. the UPPER_LAYER_PROTOCOL unless it is set to ANY

The SP is inserted at the head of the linked-list designated by the calculated hash value.

Note, this example describes a linked list structure, but can be any dynamic ordered structure.

In some circumstance (for example database maintenance), a lookup operation is required to ensure that the database contains up to date and relevant information. A lookup operation is used to retrieve a SP with a particular SELECTOR from the SPD 1, and can be described as:
lookup(SPD, SELECTOR) -> SP | NO_SP_FOUND

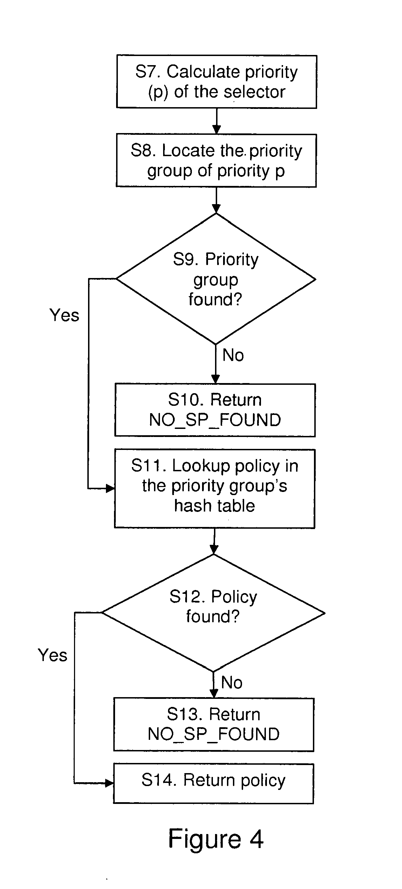

Figure 4 shows the steps of a lookup operation, with the following numbering corresponding to that of the Figure.

S7. At the start of the lookup operation, the priority value of the SELECTOR to be looked up is calculated:
p = priority(SELECTOR)

S8. The policy group having the same priority value is queried. To speed up the lookup process a helper hash table can be used.

S9. If the policy group is found, then the operation continues at step S 11, and if the policy group having the priority value is not found then the operation continues at step S10.

S10. The policy group is not found, and this result is returned to a node requesting the policy lookup.

S11. The policy group having the same priority value as the selector is found, and so a lookup is preformed of the SPs in the policy group. A hash value is calculated using a policy group hash function, in the same way as described above in step S6. A lookup of the linked list is performed using the calculated hash value for the SP with the specified SELECTOR field.

S12. If the SP is found, the operation continues at step S14, otherwise the operation continues at step S13.

S13. The SP is not found, and this result is returned to a node requesting the policy lookup.

S14. The SP is returned to the node requesting the policy lookup.

For database maintenance, it may be desirable to remove an out of date or incorrect SP from the SPD 1. In this case, a delete operation is performed, which is described as:
delete(SPD, SELECTOR)

The delete operation can be performed by a lookup operation followed by an element removal operation from the linked list that contains the specified SP. As the delete operation is performed infrequently; it need not be optimized in terms of execution time.

The most common operation is a match-lookup operation. When an IP packet is to be sent, the node must determine whether or not a SP should be applied to the packet, and if so then which SP should be applied to the packet. The match lookup operation returns the SP with the highest priority value that has selectors that match the given IP packet. In the event that more than one SP matches the IP packet, then only the SP with the highest priority value is returned. As match-lookup is a frequent operation, it must be highly optimized.

The match-lookup operation is described as:
matchlookup(SPD, IP) -> SP | NO_SP_FOUND
where
matched(IP, SP.selector) == true
and there is no SPi in SPD where
matched(IP, SPi.selector) AND priority(SPi.SELECTOR) > priority(SP)

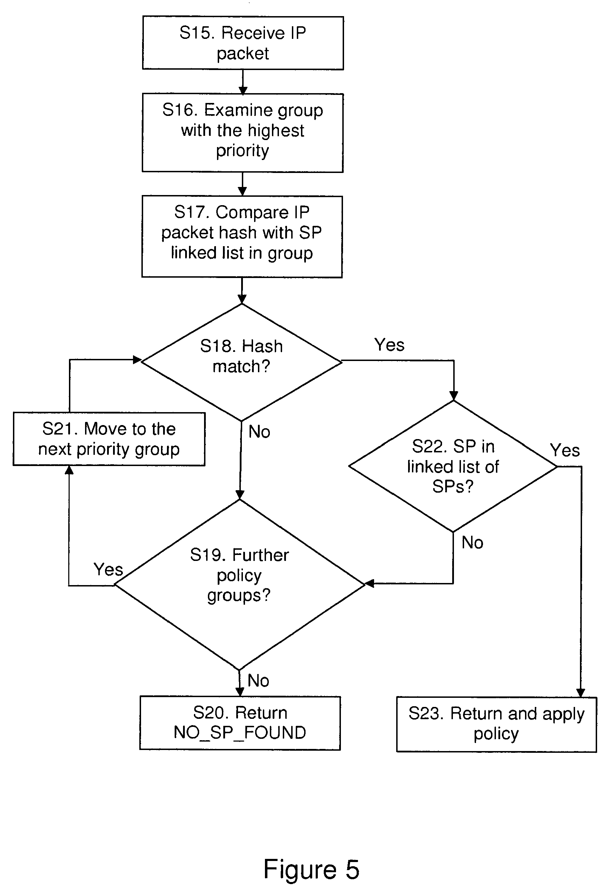

A match lookup operation is illustrated in Figure 5, with the following numbering corresponding to the numbering of Figure 5:

S15. A node such as a CSCF receives an IP packet and must make a decision about applying a Security Policy to the packet.

S16. The SDB 1 is queried. The first policy group searched is the group having the highest priority value.

S17. Take the valuable bits of the IP packet header which is determined by the SELECTOR Label of the Policy Group. A hash value is calculated using a hash function. The input for the hash function is composed from the valuable bits of the IP header fields. The valuable bits are:
a. the bits specified in the source address field that are not masked out by mask (IP.SOURCE_ADDRESS, PGROUP.SOURCE_MASK)
b. the bits specified in the destination address field that are not masked out by mask(IP.DESTINATION_ADDRESS, PGROUP.DESTINATION_MASK)
c. the IP.SOURCE_PORT unless PGROUP.SOURCE_PORT is set to ANY
d. the IP.DESTINATION_PORT unless PGROUP.DESTINATION_PORT is set to ANY
e. the I P . UPPER_LAYER_PROTOCOL unless PGROUP.UPPER_LAYER_PROTOCOL is set to ANY

The calculated hash value is compared against the hash values stored for a linked list of SPs in the policy group having the priority value using a 'matched' function. Matched is a Boolean operation that checks whether an IP datagram matches a given selector. This operation is called for every incoming and outgoing IP packets to determine which policy, if any, applies to the IP packet.
matched(IP, SELECTOR) -> true | false
This operation can be described with the following pseudo-code:
(mask(IP.SOURCE_ADDRESS, SELECTOR.SOURCE_PREFIX) == SELECTOR.SOURCE_ADDRESS)
   AND
(mask(IP.DESTINATION_ADDRESS, SELECTOR.DESTINATION_PREFIX) == SELECTOR.DESTINATION_ADDRESS)
   AND
(IP.SOURCE_PORT == SELECTOR.SOURCE_PORT ∥ SELECTOR.SOURCE_PORT == ANY)
   AND
(IP.DESTINATION_PORT == SELECTOR.DESTINATION_PORT ∥ SELECTOR.DESTINATION_PORT == ANY)
   AND
(IP.UPPER-LAYER-PROTOCOL == SELECTOR.UPPER_LAYER_PROTOCOL ∥ SELECTOR.UPPER_LAYER_PROTOCOL == ANY)

S18. If the calculated hash value matches a SP hash value stored in the SDB 1, then the operation continues at step S22, otherwise the operation continues at step S19.

S19. As no matching SP was found in the previous policy group, a determination is made to determine whether a further policy group exists having a lower priority value. If so, then the operation continues at step S21, and if not then the operation continues at step S20.

S20. By this point in the operation, all of the policy groups have been queried and no SP has been found that applies to the IP packet, so a result of no SP found is returned. The IP packet is then processed without using any SP.

S21. The policy group with the next lowest priority value is selected, and the operation repeats from step S17.

S22. A determination is made to find an SP in linked list of SPs that matches the IP packet. If an SP can be found, then the process continues at step S23, otherwise the process reverts to step S19.

S23. An SP in the group with the highest priority has been found and this SP is returned. The SP is then applied to the IP packet.

In terms of the algorithmic costs of the operations described above, the insert operation, lookup operation and delete operation each require two hash table lookups. stored policies in the SPD. A match lookup operation requires that an attempt will be made to match the IP packet with an SP stored in the policy group with the highest priority and this process continues until the first matching SP is found. If there are P policy groups, then in the worst case scenario, P hash lookups must be performed. It will be apparent that the maximum number of policy groups is independent of the number of SPs stored in the SPD. It only depends on the length of the selector fields used for the priority calculation. Thus the match-lookup cost is O(1) with the number of stored policies in the SPD.

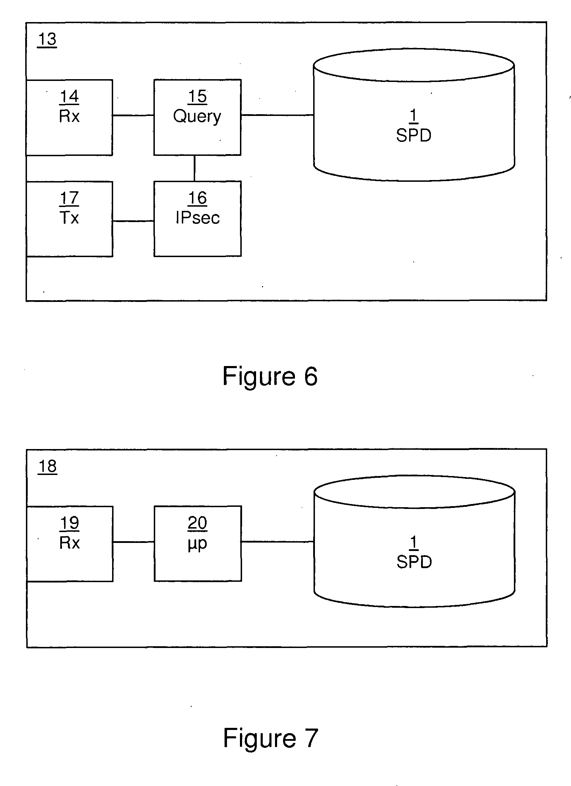

Turning now to Figure 6, a node 13 such as a CSCF is illustrated for performing a policy lookup operation. A receiver 14 is provided for receiving an IP packet. A querying function 15, typically implemented as a processor, is provided for querying the SPD 1 and obtaining from the SPD a returned matching SP. Note that in this example, the SPD is located at the node, but in many implementations the SPD will be located remotely from the node. An IPsec function 16 is provided for applying an action for the returned matching SP to the IP packet. A transmitter 17 is also provided for sending the IP packet to a further network node. The SPD 1 illustrated in Figure 6 is structured and operates in the same way as the SPD illustrated in Figure 1.

Turning now to Figure 7, a node 18 for populating a SPD 1 Security Policy database is illustrated. The node 18 is provided with a receiver 19 for receiving a SP to be inserted into the SPD 1, and a processor 20 arranged to calculate a priority value to assign to the SP and store the SP with a policy group having the priority value in the SPD 1. The invention introduces a selector based policy ordering. RFC4301 does not specify an ordering method but does requires the SPD 1 to be ordered. A well-chosen priority function facilitates the coordination of multiple SPD users, as this solution is less prone to unwanted policy overriding. Another advantage is the efficient match-lookup operation, which is the most common operation in the SPD. Policies are returned on the basis of an assigned priority value, rather than o nthe basis of when they were provisioned in the SBD 1.

The invention is described by way of example with reference to a CSCF in an IMS network, but will be appreciated that it can equally apply to any type of network that uses IPsec Security Policies.

The following abbreviations have been used in this specification:
- IP: Internet Protocol
- SP: Security Policy
- SPD: Security Policy Database
- TCP: Transmission Control Protocol
- UDP: User Datagram Protocol

## Claims

1. A method of querying an IPsec Security Policy database (1) comprising a plurality of groups of Security Policies, each group of Security Policies having a priority value, the method comprising:
a) at a network node, receiving an IP packet (S15);
b) determining a highest Security Policy priority value;
c) querying the IPSec Security Protocol database for a set of Security Policies having the Security Policy priority value (S16);
d) determining whether a Security Policy action from the set of Security Policies should be applied to the IP packet (S17, S18);
e) in the event that a Security Policy action should be applied to the IP packet, applying the Security Policy action to the IP packet (S22, S23), and in the event that no Security Policy action from the set of Security Policies should be applied to the IP packet, determining a lower Security Policy priority value and repeating steps c) to e) (S21) and, in the event that there is no lower Security Policy priority value, determining that no Security Policy can be found (S20).

2. The method according to claim 1, further comprising using information from the IP packet header to determine whether a Security Policy should be applied to the IP packet (S17, S18).

3. The method according to claim 1 or 2, further comprising:
calculating a hash value using information from the IP packet header (S17),
comparing the calculated hash value for the IP packet with hash values associated with a linked list of Security Policies (S17);
in the event that the hash values match, determining whether a Security Policy action contained in the linked list of Security Policies should be applied to the IP packet (S22, S23), and in the event that the hash values do not match, determining that no Security Policy action from the linked of Security Policies should be applied to the IP packet (S20).

4. The method according to claim 2 or 3, comprising using information selected from any of a source prefix, a source port, a destination prefix, a destination port and an Upper Layer Protocol.

5. A node (13) for use in a communication network, the node comprising
an IPsec Security Policy database (1) storing a plurality of Security Policies arranged in policy groups, each policy group having a priority value;
a querying function (15) for querying the Security Policy database to find a match for an IP packet by searching groups of Security Policies in descending order of priority value until a match is found
and the node (13) being further adapted to perform the method as defined in claim 1.

6. The node according to claim 5, comprising
a receiver (14) for receiving an IP packet;
an IPsec function (16) for applying an action for the matching Security Policy to the IP packet; and
a transmitter (17) for sending the IP packet to a further network node.

7. The node according to claim 5 or 6, wherein the querying function (15) is arranged to calculate a hash value using information contained in the IP packet header, and the querying function (15) is further arranged to compare the calculated hash value with a hash value associated with a linked list of Security Policies group to determine whether a Security Policy should be applied to the IP packet.

8. A computer program, comprising computer readable code which, when run on a programmable network node, causes the programmable network to perform a method according to any one of claims 1 to 4.

9. A recording medium storing computer readable code according to claim 8.

10. The program of claim 8, carried on a carrier medium.

11. A network node having installed thereon the program of claim 8.

## Patentansprüche

1. Verfahren zum Abfragen einer IPsec-Sicherheits-Policy-Datenbank (1), die eine Vielzahl von Gruppen von Sicherheits-Policies umfasst, wobei jede Gruppe von Sicherheits-Policies einen Prioritätswert hat, das Verfahren Folgendes umfassend:
a) Empfangen eines IP-Pakets (S15) an einem Netzknoten;
b) Bestimmen eines höchsten Sicherheits-Policy-Prioritätswerts;
c) Abfragen der IPsec-Sicherheitsprotokoll-Datenbank nach einer Menge von Sicherheits-Policies, die den Sicherheits-Policy-Prioritätswert haben (S16);
d) Bestimmen, ob eine Sicherheits-Policy-Aktion aus der Menge von Sicherheits-Policies auf das IP-Paket angewendet werden sollte (S17, S18);
e) für den Fall, dass eine Sicherheits-Policy-Aktion auf das IP-Paket angewendet werden sollte, die Sicherheits-Policy-Aktion auf das IP-Paket (S22, S23) anwenden, und für den Fall, dass keine Sicherheits-Policy-Aktion aus der Menge von Sicherheits-Policies auf das IP-Paket angewendet werden sollte, einen niedrigeren Sicherheits-Policy-Prioritätswert bestimmen und die Schritte c) bis e) (S21) wiederholen, und für den Fall, dass es keinen niedrigeren Sicherheits-Policy-Prioritätswert gibt, bestimmen, dass keine Sicherheits-Policy gefunden werden kann (S20).

2. Verfahren nach Anspruch 1, außerdem umfassend, dass Information aus dem IP-Paket-Header verwendet wird, um zu bestimmen, ob eine Sicherheits-Policy auf das IP-Paket angewendet werden sollte (S17, S18).

3. Verfahren nach Anspruch 1 oder 2, außerdem umfassend:
Berechnen eines Hash-Werts unter Verwendung von Information aus dem IP-Paket-Header (S17);
Vergleichen des berechneten Hash-Werts für das IP-Paket mit Hash-Werten, die mit einer verknüpften Liste von Sicherheits-Policies (S17) assoziiert sind;
für den Fall, dass die Hash-Werte übereinstimmen, bestimmen, ob eine in der verknüpften Liste von Sicherheits-Policies enthaltene Sicherheits-Policy-Aktion auf das IP-Paket (S22, S23) angewendet werden sollte, und für den Fall, dass die Hash-Werte nicht übereinstimmen, bestimmen, dass keine Sicherheits-Policy-Aktion aus der verknüpften Liste von Sicherheits-Policies auf das IP-Paket (S20) angewendet werden sollte.

4. Verfahren nach Anspruch 2 oder 3, umfassend, dass Information verwendet wird, die aus einem von Folgenden ausgewählt wird: einem Quellpräfix, einem Quellport, einem Zielpräfix, einem Zielport und einem Protokoll höherer Schicht.

5. Knoten (13) zur Verwendung in einem Kommunikationsnetz, wobei der Knoten umfasst:
eine IPsec-Sicherheits-Policy-Datenbank (1), die eine Vielzahl von in Policy-Gruppen angeordneten Sicherheits-Policies speichert, wobei jede Policy-Gruppe einen Prioritätswert hat;
eine Abfragefunktion (15) zum Abfragen der Sicherheits-Policy-Datenbank, um eine Übereinstimmung für ein IP-Paket zu finden, indem Gruppen von Sicherheits-Policies in absteigender Reihenfolge des Prioritätswerts durchsucht werden, bis eine Übereinstimmung gefunden wird,
und der Knoten (13) ist außerdem dazu angepasst, das Verfahren auszuführen, wie in Anspruch 1 definiert ist.

6. Knoten nach Anspruch 5, Folgendes umfassend:
einen Empfänger (14) zum Empfangen eines IP-Pakets;
eine IPsec-Funktion (16) zum Anwenden einer Aktion für die übereinstimmende Sicherheits-Policy auf das IP-Paket; und
einen Sender (17) zum Senden des IP-Pakets an einen weiteren Netzknoten.

7. Knoten nach Anspruch 5 oder 6, worin die Abfragefunktion (15) dazu angeordnet ist, einen Hash-Wert unter Verwendung von Information zu berechnen, die im IP-Paket-Header enthalten ist, und die Abfragefunktion (15) außerdem dazu angeordnet ist, den berechneten Hash-Wert mit einem Hash-Wert zu vergleichen, der mit einer verknüpften Liste der Sicherheits-Policies-Gruppe assoziiert ist, um zu bestimmen, ob eine Sicherheits-Policy auf das IP-Paket angewendet werden sollte.

8. Computerprogramm, computerlesbaren Code umfassend, der, wenn er auf einem programmierbaren Netzknoten abläuft, das programmierbare Netz veranlasst, ein Verfahren nach einem der Ansprüche 1 bis 4 auszuführen.

9. Aufzeichnungsmedium, das computerlesbaren Code nach Anspruch 8 speichert.

10. Programm nach Anspruch 8, das auf einem Trägermedium getragen wird.

11. Netzknoten, auf dem das Programm von Anspruch 8 installiert ist.

## Revendications

1. Procédé d'interrogation d'une base de données de politiques de sécurité IPsec (1) comprenant une pluralité de groupes de politiques de sécurité, chaque groupe de politiques de sécurité présentant une valeur de priorité, le procédé consistant à :
a) au niveau d'un noeud de réseau, recevoir un paquet IP (S15) ;
b) déterminer une valeur de priorité de politique de sécurité la plus élevée ;
c) interroger la base de données de protocoles de sécurité IPsec en ce qui concerne un ensemble de politiques de sécurité présentant la valeur de priorité de politique de sécurité (S16) ;
d) déterminer si une action de politique de sécurité de l'ensemble de politiques de sécurité doit être appliquée au paquet IP (S 17, S18) ;
e) dans le cas où une action de politique de sécurité doit être appliquée au paquet IP, appliquer l'action de politique de sécurité au paquet IP (S22, S23), et dans le cas où aucune action de politique de sécurité de l'ensemble de politiques de sécurité ne doit être appliquée au paquet IP, déterminer une valeur de priorité de politique de sécurité inférieure et répéter les étapes c) à e) (S21) et, dans le cas où il n'y a pas de valeur de priorité de politique de sécurité inférieure, déterminer qu'aucune politique de sécurité ne peut être trouvée (S20).

2. Procédé selon la revendication 1, consistant en outre à utiliser des informations provenant de l'entête de paquet IP en vue de déterminer si une politique de sécurité doit être appliquée au paquet IP (S17, S18).

3. Procédé selon la revendication 1 ou 2, consistant en outre à :
calculer une valeur de hachage en utilisant les informations de l'entête de paquet IP(S17);
comparer la valeur de hachage calculée pour le paquet IP à des valeurs de hachage associées à une liste liée de politiques de sécurité (S 17) ;
en cas de correspondance des valeurs de hachage, déterminer si une action de politique de sécurité contenue dans la liste liée de politiques de sécurité doit être appliquée au paquet IP (S22, S23), et en cas d'absence de correspondance des valeurs de hachage, déterminer qu'aucune action de politique de sécurité de la liste liée de politiques de sécurité ne doit être appliquée au paquet IP (S20).

4. Procédé selon la revendication 2 ou 3, consistant à utiliser des informations sélectionnées à partir de l'un quelconque des éléments parmi un préfixe source, un port source, un préfixe de destination, un port de destination et un protocole de couche supérieure.

5. Noeud (13) à utiliser dans un réseau de communication, le noeud comprenant
une base de données de politiques de sécurité IPsec (1) stockant une pluralité de politiques de sécurité agencées en groupes de politiques, chaque groupe de politiques présentant une valeur de priorité ;
une fonction d'interrogation (15) destinée à interroger la base de données de politiques de sécurité en vue de rechercher une correspondance pour un paquet IP en recherchant les groupes de politiques de sécurité dans l'ordre descendant des valeurs de priorité jusqu'à ce qu'une correspondance soit trouvée ;
et le noeud (13) étant en outre apte à exécuter le procédé selon la revendication 1.

6. Noeud selon la revendication 5, comprenant :
un récepteur (14) destiné à recevoir un paquet IP ;
une fonction IPsec (16) destinée à appliquer au paquet IP une action pour la politique de sécurité correspondante ; et
un émetteur (17) destiné à envoyer le paquet IP à un noeud de réseau supplémentaire.

7. Noeud selon la revendication 5 ou 6, dans lequel la fonction d'interrogation (15) est agencée de manière à calculer une valeur de hachage en utilisant les informations contenues dans l'entête de paquet IP, et la fonction d'interrogation (15) est en outre agencée de manière à comparer la valeur de hachage calculée à une valeur de hachage associée à une liste liée de groupe de politiques de sécurité, en vue de déterminer si une politique de sécurité doit être appliquée au paquet IP.

8. Programme informatique, comprenant un code lisible par ordinateur, qui, lorsqu'il est exécuté sur un noeud de réseau programmable, amène le réseau programmable à mettre en oeuvre un procédé selon l'une quelconque des revendications 1 à 4.

9. Support d'enregistrement stockant un code lisible par ordinateur selon la revendication 8.

10. Programme selon la revendication 8, transporté sur un support porteur.

11. Noeud de réseau sur lequel est installé le programme selon la revendication 8.
